# EUROPÄISCHE PATENTANMELDUNG

(11) **EP 3 421 852 A1**
(43) Veröffentlichungstag der Anmeldung: **02.01.2019**
(21) Anmeldenummer: 17179083.5
(22) Anmeldetag: 30.06.2017
(51) Int. Cl.: F16K 51/02, F16K 37/00, F16K 3/16, F16K 3/06, F16K 3/02

(54) **VAKUUMVENTIL MIT INERTIALSENSOR**

(71) Anmelder: VAT Holding AG, 9469 Haag (CH)
(72) Erfinder: Eschenmoser, Adrian, CH-9472 Grabs (CH); Hofer, Andreas, CH-9469 Widnau (CH)
(74) Vertreter: Kaminski Harmann

(57) **Zusammenfassung**

Die Erfindung betrifft ein Vakuumventil mit einer Sensoranordnung mit mindestens einem Inertialsensor (11a,11b,11c,11d,11e), wobei die Sensoranordnung derart ausgebildet ist, dass durch die Sensoranordnung ein Messsignal bezüglich einer am Ventil auftretenden Beschleunigung erfasst wird.

## Beschreibung

Die Erfindung betrifft ein Vakuumventil mit einer Sensoranordnung mit mindestens einem Inertialsensor.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Abnutzungen des Dichtmaterials oder der Dichtflächen auftreten.

Um eine dabei eventuell entstehende Undichtigkeit zu vermeiden oder die Qualität der Dichtung auf einem konstant ausreichend hohen Niveau zu halten, wird ein Ventilverschluss typischerweise in bestimmten zeitlichen Abständen ausgetauscht bzw. erneuert. Ein solcher Wartungszyklus bemisst sich dabei meist an der Anzahl der zu erwartenden Öffnungs- und Schliesszyklen in einem bestimmten Zeitraum. Die Wartung erfolgt also meist vorsorglich um das Eintreten einer Undichtigkeit vorab weitestgehend ausschliessen zu können.

Ein solches Instandhaltungserfordernis beschränkt sich nicht allein auf das Dichtmaterial oder den Ventilteller, sondern erstreckt sich insbesondere ebenso auf den Ventilsitz, der einen zum Ventilteller korrespondierenden Teil des Vakuumventils bildet. Die Struktur einer Dichtfläche seitens des Ventilsitzes, z.B. einer in den Ventilsitz eingelassenen Nut, ist von einer mechanischen Beanspruchung ebenso betroffen. Daher kann auch eine aus einem Betrieb des Ventils resultiere strukturelle Veränderung der Nut eine Beeinträchtigung der Dichtung bewirken. Auch hierfür sind üblicherweise entsprechende Wartungsintervalle definiert.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt. Jeder derartige Wartungsschritt bedeutet in der Regel eine gewisse Stillstandszeit für einen Produktionsprozess und einen erhöhnten technischen und finanziellen Aufwand. Dies bedeutet dann in Summe einen Stillstand der Produktion in Abständen, die kürzer sind als erforderlich, und häufiger als dies überhaupt notwendig wäre.

Der Erfindung liegt somit die Aufgabe zugrunde, ein verbessertes Vakuumventil bereitzustellen, welches eine optimierte Ventilwartung und damit eine Verbesserung, d.h. Verkürzung von allfälligen Prozessstillständen, erlaubt.

Eine weitere Aufgabe der Erfindung ist es ein solches Ventilsystem bereitzustellen, mit dem eine zuverlässigere gasdichte Abdichtung eines Prozessvolumens erreicht werden kann, insbesondere wobei die Qualität der Abdichtung prognostizierbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gemäss der vorliegenden Erfindung werden ein Vakuumventil und ein Inertialsensor kombiniert und dabei so ausgestaltet, dass durch die Kombination eine Überwachung des Vakuumventils erfolgen kann. Mit dem Sensor können zeit- und/oder frequenzabhängige Messsignale erfasst werden, mit welchen wiederum eine Zustandsinformation hinsichtlich des Vakuumventils abgeleitet werden kann.

Damit kann also der Zustand des Vakuumventils überwacht und fortlaufend bewertet werden. Mittels der so erzeugbaren Daten kann ein Wartungs- bzw. Austauschzeitpunkt einzelner Komponenten, beispielsweise des Schmierfettes im Antrieb, bestimmt werden.

Zum Beispiel kann somit ein Versagen der Dichtigkeit des Ventils weitgehend vorhergesagt und eine zeitlich oder örtlich punktuell abgestimmte Gegenmassnahme empfohlen oder eingeleitet werden. Wartungsintervalle sind dadurch besser planbar und effizienter durchführbar, wobei gleichzeitig die Prozessintegrität gewahrt und gesichert bleibt.

Als relevante Zustandsinformation des Vakuumventils kann z.B. ein Schwingungsverhalten von Teilen des Antriebes oder eines elastomeren Dichtmaterials betrachtet werden.

Die Erfindung betrifft ein Vakuumventil, insbesondere ein Vakuumschieberventil, ein Pendelventil, oder ein Monoventil, zur Regelung eines Volumen- oder Massenstroms und/oder zum gasdichten Unterbrechen eines Fliesswegs, mit einem Ventilgehäuse, einem Ventilsitz, der eine eine Öffnungsachse definierende Ventilöffnung und eine die Ventilöffnung umlaufende erste Dichtfläche aufweist, einen Ventilverschluss, insbesondere Ventilteller, der zumindest zu einem von: Regeln des Volumen- oder Massenstroms, und Unterbrechen des Fliesswegs, ausgebildet ist und eine zu der ersten Dichtfläche korrespondierende zweite Dichtfläche aufweist, einer mit dem Ventilverschluss gekoppelten Antriebseinheit, die derart ausgebildet ist, dass der Ventilverschluss zur Bereitstellung von jeweiligen Ventilöffnungszuständen definiert variierbar und einstellbar ist und von einer Offenposition, in welcher der Ventilverschluss die Ventilöffnung zumindest teilweise freigibt in eine Schliessposition, in welcher die zweite Dichtfläche in Richtung der ersten Dichtfläche gedrückt wird und die Ventilöffnung im Wesentlichen gasdicht verschlossen ist, und zurück verstellbar ist, wobei das Vakuumventil ferner eine Sensoranordnung mit mindestens einem Inertialsensor umfasst, wobei die Sensoranordnung zur Erfassung eines Messsignals bezüglich einer am Ventil auftretenden Beschleunigung ausgebildet ist.

Das Vakuumventil kann zudem eine Kontroll- und Steuereinheit aufweisen, die zur Steuerung der Sensoranordnung und zur Verstellung des Ventilverschlusses zwischen der Offenposition und der Schliessposition mittels der Antriebseinheit ausgebildet ist. Insbesondere kann in diese gesteuerte Verstellung auch auf Grundlage einer Auswertung des Messsignals eingegriffen werden. So kann beispielsweise der Prozess ganz gestoppt ("Notstopp") oder verlangsamt werden, sollten irreguläre bzw. betraglich zu hohe Beschleunigungen im System auftreten.

Die Kontroll- und Steuereinheit kann dazu ausgebildet sein, basierend auf den Messwerten ein Frequenzspektrum bereitzustellen. Als Messwerte werden insbesondere Beschleunigungswerte über der Zeit aufgetragen aufgezeichnet. Daraus lässt sich dann nach Bedarf ein Frequenzspektrum ableiten, welches sich mit der Zeit (z.B. während der Ventilverschluss verfährt) ändern kann.

Die Kontroll- und Steuereinheit kann weiterhin dazu ausgebildet sein, basierend auf einer Analyse der Messwerte hinsichtlich einer oder mehrerer Messwertfrequenzen ein Ausgabesignal bezüglich einer Lokalisierung einer die jeweilige Messwertfrequenz verursachenden Schwingung bereitzustellen. Beispielsweise kann diese Lokalisierung über die Erkennung charakteristischer Frequenzen realisiert werden, indem z.B. niedere Frequenzen auf Vibrationen grösserer Bauteile oder auf von aussen eingeleitete Schwingungen und hohe Frequenzen auf Vibrationen kleinerer Bauteile schliessen lassen. Durch entsprechende Testdurchführungen, in denen die einzelnen Bauteile jeweils angeregt werden, können solche charakteristischen Frequenzen jeweils "erlernt" werden und für die Ausgabesignale als Erkennungsschema dienen.

Die Kontroll- und Steuereinheit kann ebenso dazu ausgebildet sein, basierend auf einem Abgleich der Messwerte mit vordefinierten Toleranzwerten ein Ausgabesignal bezüglich einer Bewertung eines durch das Vakuumventil gesteuerten Prozesses bereitzustellen. So kann beispielsweise als Ausgabesignal eine Warnung ausgegeben werden, welche beinhalten kann, dass im System betraglich zu hohe Beschleunigungen vorkommen. Insbesondere kann eine solche Warnung ausgegeben werden, wenn die Messwerte oder ein Messwert einen Toleranzwertebereich verlässt oder tangiert.

Weiters kann die Kontroll- und Steuereinheit dazu ausgebildet sein, basierend auf einer Trendüberwachung von Messwerten mehrerer, insbesondere gleichartiger, durch das Vakuumventil gesteuerter Prozesse ein Ausgabesignal bereitzustellen, welches eines oder beide von: einer Warnung über erhöhten Verschleiss einer Komponente des Vakuumventils, und einer Vorhersage über die Haltbarkeit einer Komponente des Vakuumventils, umfasst. Eine Warnung über erhöhten Verschleiss einer Komponente des Vakuumventils könnte beispielsweise erfolgen, wenn im Rahmen der Trendüberwachung festgestellt würde, dass Schwingungsamplituden im System von Prozess zu Prozess schneller anwachsen, als mit einer Toleranzwachstumsrate. Eine Vorhersage über die Haltbarkeit einer Komponente des Vakuumventils könnte beispielsweise erfolgen, indem ein im Rahmen der Trendüberwachung festgestellter Trend eines Amplituden- oder Schwingungswachstums von Prozess zu Prozess bestimmt oder durch Interpolation errechnet wird, und die Fortsetzung eines solchen Trends bis zu einer Toleranzgrenze simuliert wird.

Auch kann die Kontroll- und Steuereinheit dazu ausgebildet sein, basierend auf während des Schliessvorgangs parallel zur Öffnungsachse gemessenen Beschleunigungswerten und zumindest einem bekannten Festigkeitswert des Kopplungsbauteils, insbesondere dem E-Modul oder G-Modul in Verbindung mit den Dimensionen des Kopplungsbauteils, eine Anpresskraft zu bestimmen, mit welcher der Ventilverschluss in der Schliessposition am Ventilsitz anliegt. Insbesondere kann dies durch Integrieren der Beschleunigungswerte erfolgen, wodurch ein Verfahrweg bzw. eine Biegestrecke ermittelt werden kann, welche wiederum mit Kenntnis der Steifigkeit des Kopplungsbauteils zu einer Kraft berechnet werden kann. Als Startpunkt für das Aufintegrieren der Beschleunigungswerte kann etwa der erste Kontakt zwischen Ventilverschluss und Ventilsitz im Schliessvorgang dienen. Dieser erste Kontakt kann ebenfalls durch die Beschleunigungswerte erfasst werden. Der hierfür verwendete oder die hierfür verwendeten Sensoren können z.B. ein Drehratensensor und/oder ein Beschleunigungssensor sein, die jeweils beispielsweise am Gehäuse des Antriebs oder am Kopplungselement (Arm bzw. Stange) angeordnet sein können.

Die Sensoranordnung kann derart angeordnet und ausgebildet sein, dass durch das Messsignal eine Beschleunigung erfasst wird, die durch Reibschwingung an zumindest einem der nachfolgend genannten Orte entsteht: zwischen zumindest einem Teil der Dichtung und zumindest einem Teil der ersten Dichtfläche, und zwischen zumindest einem Teil der Dichtung und zumindest einem Teil der zweiten Dichtfläche.

Die Sensoranordnung kann derart angeordnet und ausgebildet sein, dass durch das Messsignal eine Beschleunigung erfasst wird, die in der Antriebseinheit entsteht. Eine dort verortete Beschleunigung kann etwa durch mangelhafte oder veraltete Fettschmierung, durch einen Getriebeschaden als Transportschaden oder in Folge eines Crashs auftreten. Generell betrachtet kann die Beschleunigung z.B. durch erhöhte Reibung im System hergerufen werden, die wiederum durch Abrieb oder Verschleiss entsteht.

Die Sensoranordnung kann derart angeordnet und ausgebildet sein, dass durch das Messsignal eine Beschleunigung erfasst wird, die von Aussen auf das Vakuumventil einwirkt. Auf diese Weise können etwa Erdbeben oder in der Umgebung auftretende Arbeitsunfälle detektiert werden, und gegebenenfalls Massnahmen vorgeschlagen oder durchgeführt werden, wie etwa die Pausierung des momentan laufenden Prozesses.

Die Sensoranordnung kann derart ausgebildet sein, dass zumindest ein Inertialsensor an zumindest einem der nachfolgend genannten Orte angeordnet ist: an einem Teil des Ventilsitzes, das zumindest einen Teil der ersten Dichtfläche aufweist, an einem Teil des Ventilverschlusses, das zumindest einen Teil der zweiten Dichtfläche aufweist, am Ventilgehäuse, und an einem Gehäuse der Antriebseinheit.

Die Sensoranordnung kann mindestens einen der nachfolgend genannten Inertialsensoren umfassen: ein Beschleunigungssensor, welcher Beschleunigungen entlang mindestens einer definiert ausgerichteten Achse detektiert, und ein Drehratensensor, welcher Rotationsgeschwindigkeiten oder Rotationsbeschleunigungen um mindestens eine definiert ausgerichtete Achse detektiert. So können an unterschiedlichen Orten im oder am Ventil mehrere Inertialsensoren unterschiedlicher Sorte angeordnet sein, also z.B. ein Gyroskop oder ein Drehratensensor an einem Kopplungsbauteil und ein Beschleunigungssensor am Antriebsgehäuse. Ganz generell detektiert ein Beschleunigungssensor Beschleunigungen entlang mindestens einer Linearachse, insbesondere dreidimensional in den drei Raumachsen, welche jeweils zueinander senkrecht stehen.

Die Antriebseinheit kann mit dem Ventilgehäuse verbunden sein, und der Ventilverschluss kann über ein Kopplungsbauteil mit der Antriebseinheit gekoppelt sein. Das Kopplungsbauteil kann an einem mit dem Ventilgehäuse verbundenen Abstützelement für eine kontrollierte Führung des Kopplungsbauteils anliegen.

Das Vakuumventil kann einen von einer äusseren Umgebung abgetrennten Vakuumbereich definieren, und zum Messsignal beitragende Inertialsensoren der Sensoranordnung können ausserhalb des Vakuumbereichs angeordnet sein.

Der Ventilsitz kann durch einen Teil des Vakuumventils gebildet werden, insbesondere wobei der Ventilsitz an einem Gehäuse des Vakuumventils ausgebildet ist, oder von einer Prozesskammer, insbesondere einem Kammergehäuse, bereitgestellt sein.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche Ausführungsform eines erfindungsgemässen Vakuumventils als Pendelventil;
- Fig. 2a-c: eine mögliche Ausführungsform eines erfindungsgemässen Vakuumventils als Transferventil;
- Fig. 3a,b: schematische Darstellung einer erfindungsgemässen Sensoranordnung in einem Transferventil mit zwei Inertialsensoren;
- Fig. 4a,b: schematische Darstellung einer weiteren erfindungsgemässen Sensoranordnung in einem Monoventil;
- Fig. 5a-e: schematische Darstellung einer Vakuumventilverstellung, dabei aufgezeichneter Beschleunigungsmesswerte, sowie einer beispielhaften Auswertung der Messwerte.

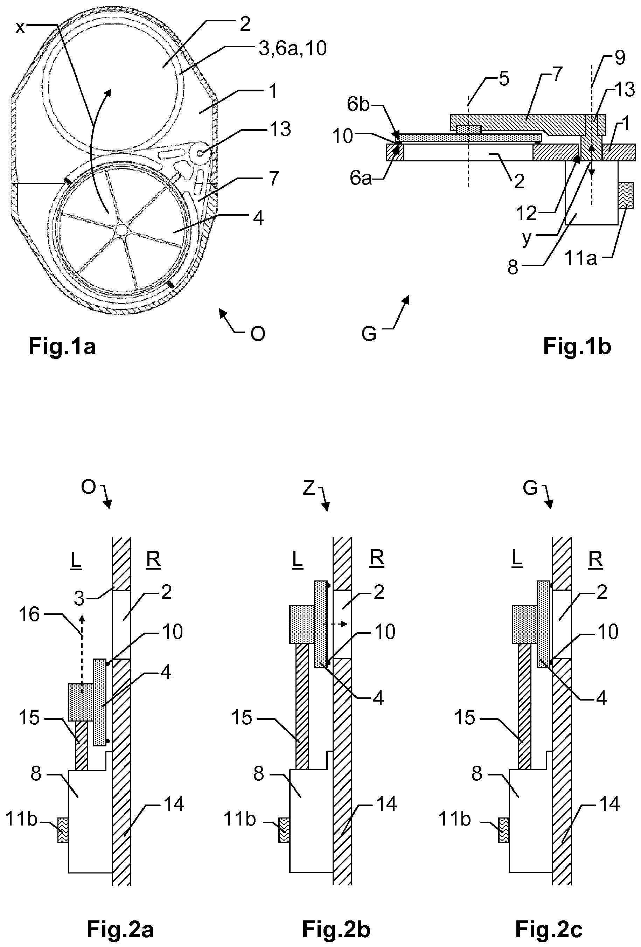

**Figur 1a** und **Figur 1b** zeigen schematisch eine mögliche Ausführungsform des erfindungsgemässen Ventils in Form eines Pendelventils. Das Ventil zum im Wesentlichen gasdichten Unterbrechen eines Fliesswegs besitzt ein Ventilgehäuse 1, welches eine Öffnung 2 aufweist. Die Öffnung 2 hat hier beispielsweise einen kreisrunden Querschnitt. Die Öffnung 2 wird von einem Ventilsitz 3 umschlossen. Dieser Ventilsitz 3 wird von einer axial in Richtung eines Ventiltellers 4 (Ventilverschluss) weisenden und quer zur Öffnungsachse 5 verlaufenden, die Form eines Kreisrings aufweisenden Dichtfläche 6a, welche im Ventilgehäuse 1 ausgeformt ist, gebildet. Der Ventilteller 4 ist schwenkbar und im Wesentlichen parallel zur Öffnungsachse 5 verstellbar. In einer Geschlossenstellung G (Fig.1b) des Ventiltellers 4, ist die Öffnung 2 mittels des Ventiltellers 4 gasdicht verschlossen. Eine Offenstellung O des Ventiltellers 4 ist in Fig. 1a veranschaulicht.

Der Ventilteller 4 ist über einen seitlich an dem Teller angeordneten, sich senkrecht zur Öffnungsachse 5 erstreckenden Arm 7 (Kopplungsbauteil) mit einem Antrieb 8 (Antriebseinheit) verbunden. Dieser Arm 7 befindet sich in der Geschlossenstellung G des Ventiltellers 4 ausserhalb des entlang der Öffnungsachse 5 geometrisch projizierten Öffnungsquerschnitts der Öffnung 2.

Der Antrieb 8 ist durch Einsatz eines entsprechenden Getriebes derart ausgebildet, dass der Ventilteller 4 - wie bei einem Pendelventil üblich - mittels einer Schwenkbewegung x des Antriebs 8 quer zur Öffnungsachse 5 und im Wesentlichen parallel über den Querschnitt der Öffnung 2 und senkrecht zur Öffnungsachse 5 um eine Schwenkachse 9 zwischen einer Offenstellung O und einer Zwischenstellung schwenkbar und mittels einer parallel zur Öffnungsachse 5 erfolgenden Längsbewegung y des Antriebs 8 linear verschiebbar ist. In der Offenstellung O, ist der Ventilteller 4 in einem seitlich neben der Öffnung 2 angeordneten Verweilabschnitt positioniert, so dass die Öffnung 2 und der Fliessweg freigegeben sind. In der Zwischenstellung ist der Ventilteller 4 über der Öffnung 2 beabstandet positioniert und überdeckt den Öffnungsquerschnitt der Öffnung 2. In der Geschlossenstellung ist die Öffnung 2 gasdicht geschlossen und der Fliessweg unterbrochen, indem ein gasdichter Kontakt zwischen dem Ventilverschluss 4 (Ventilteller) und der Dichtfläche 6a des Ventilsitz besteht.

Um ein automatisiertes und geregeltes Öffnen und Schliessen des Ventils zu ermöglichen, sieht das Ventil beispielsweise eine elektronische Regel- und Steuerungseinheit (Kontroll- und Steuerungseinheit) vor, die derart ausgebildet ist und mit dem Antrieb 8 in derartiger Verbindung steht, dass der Ventilteller 4 zum gasdichten Abschliessen eines Prozessvolumens oder zum Regeln eines Innendrucks dieses Volumens entsprechend verstellbar ist. Beispielsweise ist die Kontroll- und Steuerungseinheit im Gehäuse des Antriebes 8 integriert oder per Datenkabelanschluss ausgelagert.

Im vorliegenden Ausführungsbeispiel ist der Antrieb 8 als ein Elektromotor ausgebildet, wobei das Getriebe derart umschaltbar ist, dass ein Antreiben des Antriebs 8 entweder die Querbewegung x oder die Längsbewegung y bewirkt. Der Antrieb 8 und das Getriebe werden von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung die Ansteuerung der Antriebe übernimmt.

Das präzise Regeln bzw. Einstellen des Durchflusses mit dem beschriebenen Pendelventil ist nicht nur durch das schwenkende Verstellen des Ventiltellers 4 zwischen der Offenstellung O und der Zwischenstellung mittels der Querbewegung x, sondern vor allem durch lineares Verstellen des Ventiltellers 4 entlang der Öffnungsachse 5 zwischen der Zwischenstellung und der Geschlossenstellung mittels der Längsbewegung y möglich. Das beschriebene Pendelventil kann für präzise Regelaufgaben eingesetzt werden.

Sowohl der Ventilteller 4 als auch der Ventilsitz 3 besitzen jeweils eine Dichtfläche 6a,6b - eine erste und eine zweite Dichtfläche. Die erste Dichtfläche 6a weist zudem eine Dichtung 10 auf. Diese Dichtung 10 kann beispielsweise als Polymer mittels Vulkanisation auf den Ventilsitz 3 aufvulkanisiert sein. Alternativ kann die Dichtung 10 z.B. als O-Ring in einer Nut des Ventilsitzes 3 ausgeführt sein. Auch kann ein Dichtmaterial auf den Ventilsitz 3 aufgeklebt sein und dadurch die Dichtung 10 verkörpern. In einer alternativen Ausführungsform kann die Dichtung 10 seitens des Ventiltellers 4, insbesondere auf der zweiten Dichtfläche 6b, angeordnet sein. Auch Kombinationen dieser Ausführungen sind denkbar.

Der Ventilteller 4 wird beispielsweise anhand von Regelgrössen und eines ausgegebenen Steuersignals variabel eingestellt. Als Inputsignal wird zum Beispiel eine Information über einen aktuellen Druckzustand in einem mit dem Ventil verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils über die Zeit eines Regelzyklus, so dass ein Massenabfluss aus dem Volumen mittels des Ventils über die Zeit geregelt werden kann. Hierzu ist hinter dem Ventil eine Vakuumpumpe vorgesehen, d.h. das Ventil ist zwischen der Prozesskammer und der Pumpe angeordnet. Somit kann ein gewünschter Druckverlauf eingeregelt werden.

Durch die Einstellung des Ventilverschlusses 4 wird ein jeweiliger Öffnungsquerschnitt für die Ventilöffnung 2 eingestellt und damit die mögliche Gasmenge eingestellt, die pro Zeiteinheit aus dem Prozessvolumen evakuiert werden kann. Der Ventilverschluss 4 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 4 durch die Regel- und Steuerungseinheit mittels der Querbewegung x des Antriebs 8 von der Offenstellung O in die Zwischenstellung und mittels der Längsbewegung y des Antriebs 8 von der Zwischenstellung in die Geschlossenstellung verstellbar. Zum vollständigen Öffnen des Fliesswegs ist der Ventilteller 4 durch die Steuerung mittels der Längsbewegung y des Antriebs 8 von der Geschlossenstellung in der Zwischenstellung und von dort aus mittels der Querbewegung x des Antriebs 8 von der Zwischenstellung in die Offenstellung O verstellbar.

Das Anpressen des Ventiltellers 4 auf den Ventilsitz 5 muss derart erfolgen, dass sowohl die geforderte Gasdichtigkeit innerhalb des gesamten Druckbereichs sichergestellt ist, als auch eine Beschädigung der Dichtung 10 durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers 4 vor.

Besonders bei grossen Druckschwankungen oder dem Wechsel von Unterdruck auf Überdruck, oder umgekehrt, ist eine gleichmässige Kraftverteilung während eines Regelprozess, d.h. einer Variation des Öffnungsquerschnitts, jedoch nicht immer gewährleistbar. Je nach Ventilbeanspruchung werden also beispielsweise die Dichtung 10 (das Dichtmaterial), der Ventilteller 4 und die Dichtflächen 6a,6b unterschiedlich beansprucht, wodurch sich beispielsweise je nach Ventilbeanspruchung variable effektive Wartungsintervalle ergeben.

Im Stand der Technik wird ein Ventilverschluss typischerweise vorsorglich in festen zeitlichen Abständen ausgetauscht bzw. erneuert, um eine eventuell entstehende Undichtigkeit zu vermeiden oder die Qualität der Dichtung auf einem konstant ausreichend hohen Niveau zu halten. Dies hat unter anderem den Nachteil, dass Ventilteile zumeist vor Ablauf deren regulärer oder tatsächlicher Lebensdauer erneuert oder ersetzt werden.

Gemäss der vorliegenden Erfindung weist das Vakuumventil eine Sensoranordnung mit mindestens einem Inertialsensor auf, im gezeigten Beispiel ein Beschleunigungssensor 11a am Gehäuse der Antriebseinheit 8, wodurch beispielsweise eine Überwachung eines Dichtungsverschleisses des Vakuumventils oder eine Überwachung der Antriebseinheit erfolgen kann.

Zum Beispiel kann mittels des Inertialsensors 11a die Erfassung einer Reibschwingung zwischen einer der zueinander korrespondierenden Dichtflächen 6a,6b und der zwischen den Dichtflächen 6a,6b liegenden Dichtung 10 unabhängig von Druckschwankungen der Prozesskammer oder dem Verschleiss der anderen Bauteile erfolgen. Solche und andere Schwingungen können also über eine Prozessdauer hinweg, z.B. in Echtzeit, erfasst werden. Insbesondere werden über mehrere Prozesse hinweg solche Aufzeichnungen gesammelt und im Rahmen einer Trendüberwachung analysiert.

Dadurch kann ein Verlauf des Dichtungsverschleisses überwacht werden und so die Wartungsintervalle entsprechend dem tatsächlichen Verschleiss dynamisch eingestellt werden.

Mittels der Sensoranordnung können Messsignale erfasst werden und anhand dieser Signale eine Zustandsinformation des Vakuumventils bezüglich einer am Ventil auftretenden Beschleunigung abgeleitet werden. Das Verhalten des Vakuumventils kann also überwacht und fortlaufend bewertet werden.

Im gezeigten Beispiel erfasst der Beschleunigungssensor 11a beispielsweise eine Beschleunigung am Antriebsgehäuse 8 in zumindest einer Translation, beispielsweise normal zur Gehäuseoberfläche. Damit werden folglich Schwingungen aufgezeichnet, welche senkrecht zur Öffnungsachse 5 stattfinden. Insbesondere ist die erfindungsgemässe Sensoranordnung derart konzipiert, dass in allen drei Raumachsen, d.h. dreidimensional, Beschleunigungen detektiert werden. Alternativ oder zusätzlich können auch rotatorische Geschwindigkeiten bzw. Beschleunigungen mit einem oder mehreren von der Sensoranordnung umfassten Drehratensensoren detektiert werden. Die jeweiligen Achsen und deren Ausrichtungen können bedarfsweise konfiguriert werden.

Durch Frequenz- und/oder Amplitudenanalyse der aufgezeichneten Schwingungen kann jeweils deren Ursprung ermittelt werden. Eine solche Lokalisierung basiert gegebenenfalls auf Erfahrungswerten oder Testaufzeichnungen, in welchen die einzelnen Ventilkomponenten künstlich angeregt werden.

Zusätzlich oder alternativ könnte ein Inertialsensor auch an jeder der gezeigten Komponenten bereitgestellt werden, wobei eine Auswertung der Messwerte dementsprechend anzupassen ist.

Alternativ zu einem Pendelventil wie dargestellt kann das erfindungsgemässe Vakuumventil mit einem anderen Vakuumventiltyp, z.B. einem Klappventil, Schieberventil oder einem sog. Butterfly-Regelventil, realisiert sein. Insbesondere ist das erfindungsgemässe Ventil zum Einsatz im Vakuumbereich ausgebildet. Ferner sind ebenso Pendelventile einsetzbar, deren Verschluss nur in einer Richtung verstellt werden kann.

**Figur 2a** bis **Figur 2c** zeigen schematisch eine mögliche Ausführungsform des erfindungsgemässen Ventils in Form eines Transferventils, dargestellt in unterschiedlichen Verschlusspositionen. Die in den vorherigen Figuren verwendeten Bezugszeichen gelten hier analog.

Das gezeigte Transferventil ist eine Sonderform eines Schieberventils. Das Vakuumventil hat ein rechteckiges, plattenförmiges Verschlusselement 4 (z.B. Ventilteller), das eine Dichtfläche 6b zum gasdichten Verschliessen einer Öffnung 2 aufweist. Die Öffnung 2 hat einen dem Verschlusselement 4 entsprechenden Querschnitt und ist in einer Wand 14 ausgeformt. Die Öffnung 2 ist von einem Ventilsitz 3, der seinerseits ebenfalls eine mit der Dichtfläche 6b des Verschlusselements 4 korrespondierende Dichtfläche 6a bereitstellt, umgeben. Die Dichtfläche 6b des Verschlusselements 4 umläuft das Verschlusselement 4 und trägt ein Dichtmaterial 10 (Dichtung). In einer Geschlossenposition werden die Dichtflächen 6a,6b aufeinander gedrückt und das Dichtmaterial wird zwischen den beiden Dichtflächen 6a,6b verpresst.

Die Öffnung 2 verbindet einen ersten Gasbereich L, welcher sich in der Figur links der Wand 14 befindet, mit einem zweiten Gasbereich R rechts der Wand 14. Die Wand 14 wird z.B. durch eine Kammerwand einer Vakuumkammer gebildet. Das Vakuumventil wird dann durch ein Zusammenwirken der Kammerwand 14 mit dem Verschlusselement 4 gebildet.

Das Verschlusselement 4 ist an einem Verstellarm 15 angeordnet, der hier beispielsweise stangenförmig ist, und sich entlang einer geometrischen Verstellachse 16 erstreckt. Der Verstellarm 15 ist mit einer Antriebseinheit 8 mechanisch gekoppelt, mittels welcher das Verschlussglied 4 in dem ersten Gasbereich L links der Wand 14 durch Verstellen des Verstellarms 15 mittels der Antriebseinheit 8 zwischen einer Offenposition O (Fig.2a) über eine Zwischenposition Z (Fig.2b) in eine Geschlossenposition G (Fig.2c) verstellbar ist.

In der Offenposition O befindet sich das Verschlusselement 4 ausserhalb des Projektionsbereichs der Öffnung 2 und gibt diese vollständig frei, wie in Figur 2a gezeigt.

Durch Verstellen des Verstellarms 15 in axiale Richtung parallel zu der Verstellachse 16 und parallel zu der Wand 14 kann das Verschlusselement 4 mittels der Antriebseinheit 8 von der Offenposition O in die Zwischenposition Z verstellt werden.

In dieser Zwischenposition Z überdeckt die Dichtfläche 6b des Verschlusselements die Öffnung 2 und befindet sich in beabstandeter Gegenüberlage zu der die Öffnung 2 umgebenden Dichtfläche 6a des Ventilsitzes 3, wie in Figur 2b gezeigt.

Durch Verstellen des Verstellarms 15 in Richtung quer zur Verstellachse 16, also z.B. senkrecht zur Wand 14 und zum Ventilsitz 3, kann das Verschlusselement 4 von der Zwischenposition Z in die Geschlossenposition G (Figur 2c) verstellt werden.

In der Geschlossenposition G verschliesst das Verschlusselement 4 die Öffnung 2 gasdicht und trennt den ersten Gasbereich L von dem zweiten Gasbereich R gasdicht.

Das Öffnen und Schliessen des Vakuumventils erfolgt also mittels der Antriebseinheit 8 durch eine L-förmige Bewegung des Verschlusselements 4 und des Verstellarms 15. Daher wird das gezeigte Transferventil auch L-Typ-Ventil genannt.

Ein Transferventil wie gezeigt wird typischerweise zur Abdichtung eines Prozessvolumens (Vakuumkammer) und zur Be- und Entladung des Volumens vorgesehen. Häufige Wechsel zwischen der Offenposition O und der Geschlossenposition G sind bei einem solchen Einsatz die Regel. Hierdurch können verstärkte Abnutzungserscheinungen der Dichtflächen 6a,6b, der Dichtung 10 und des Antriebes 8 eintreten.

Erfindungsgemäss ist eine Sensoranordnung mit zumindest einem Inertialsensor 11b vorgesehen, zur Erfassung eines Messsignals bezüglich einer am und/oder im Ventil auftretenden Beschleunigung, insbesondere eines Beschleunigungsverlaufs. Das erfasste Messsignal kann also insbesondere zeitabhängig aufgezeichnet und anschliessend ausgewertet werden.

Im gezeigten Beispiel ist ein Inertialsensor 11b am Gehäuse des Antriebs 8 angeordnet und erfasst somit beispielsweise durch den Antrieb bedingte Schwingungen. Durch die erfindungsgemässe Sensoranordnung kann während eines Prozessablaufs ein Versagen diverser Bauteile vorhergesagt werden, indem vor irregulären, d.h. insbesondere zu hohen Beschleunigungen (Vibrationen, Schwingungen, Rucke) oder vor ungewollten Trends solcher Beschleunigungen gewarnt wird.

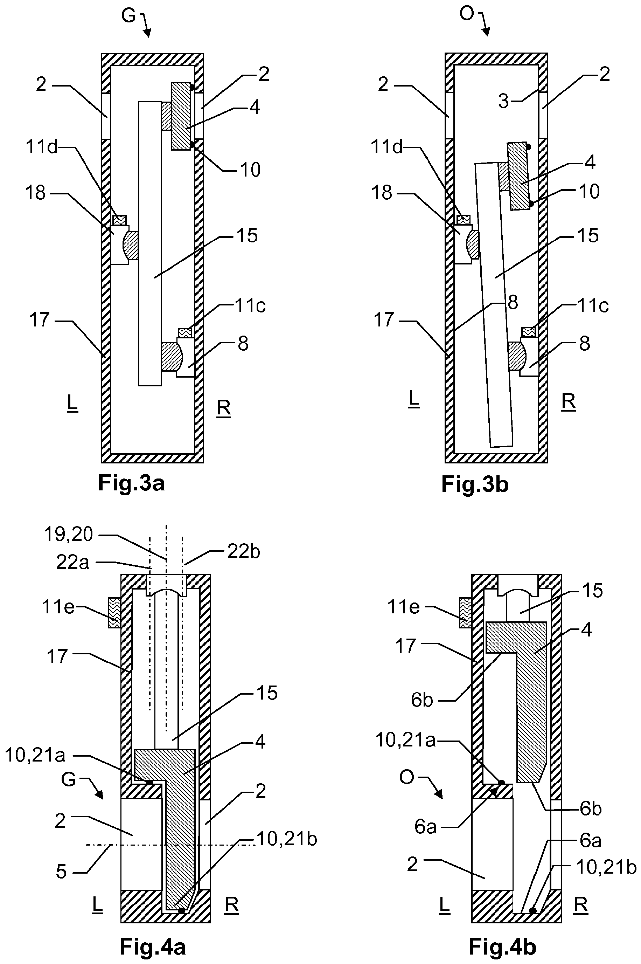

Die **Figuren 3a** und **3b** zeigen schematisch eine weitere mögliche Sensoranordnung in einem erfindungsgemässen Transferventil, dargestellt in einer Geschlossenposition G (Fig.3a) und einer Offenposition O (Fig.3b).

Die in den vorherigen Figuren verwendeten Bezugszeichen gelten hier analog. In den gezeigten Figuren ist der Ventilsitz 3 ferner an einem Gehäuse 17 des Vakuumventils ausgebildet. Für einen Fachmann ist jedoch klar, dass die nachfolgende Beschreibung im Wesentlichen analog auf Ausführungsformen anwendbar ist, wobei der Ventilsitz 3 von einer Prozesskammer, d.h. einem Kammergehäuse, bereitgestellt wird.

Weiterhin versteht es sich von selbst, dass der hier rein schematisch als Kippmechanismus dargestellte Ventilmechanismus nicht einschränkend zu verstehen ist und ein Fachmann die erfinderische Sensoranordnung beispielsweise in analoger Weise auf einen beliebigen L-Motion Antrieb übertragen kann, z.B. einen L-Motion Antrieb mit zwei senkrecht aufeinander stehenden linearen Verstellrichtungen des Ventiltellers.

Zur kontrollierten Führung des Verstellarms 15 weist das Vakuumventil hier beispielsweise eine Führungskomponente 18 auf, wobei die Antriebseinheit 8 und die Führungskomponente 18 jeweils in einer festen Anordnung zueinander stehen, hier beispielsweise dadurch, dass sowohl die Antriebseinheit 8 wie auch die Führungskomponente 18 jeweils ortsfest mit dem Ventilgehäuse 17 verbunden sind. Der Verstellarm 15 ist ferner mit dem Ventilverschluss 4 und der Antriebseinheit 8 mechanisch gekoppelt, wobei durch Verstellen des Verstellarms 15, mittels der Antriebseinheit 8, der Ventilverschluss 4 zwischen der Offenposition O und der Schliessposition G im Wesentlichen parallel zum Ventilsitz 3 verstellbar ist, insbesondere in einer L-Motion Bewegung wie in den Figuren 2a bis 2d beschrieben.

Die Sensoranordnung umfasst beispielhaft die Inertialsensoren 11c und 11d und kann derart ausgebildet sein, dass das Messsignal einen Stick-Slip-Effekt an einem der Kopplungsbauteile und/oder im Antrieb 8 erfasst. Auch Reibschwingungen an der Dichtung 10 könnten mit einer solchen Sensoranordnung erfasst werden, wobei auch eine näher an der Dichtung gelegene Anordnung eines Inertialsensors hierfür denkbar ist, dies z.B. am Ventilgehäuse 17.

Die in den Figuren 3a und 3b gezeigte Sensoranordnung weist nun zwei Inertialsensoren 11d,11e auf, wobei beispielsweise ein Beschleunigungssensor 11d an der Führungskomponente 18 bereitgestellt wird und ein Gyroskop oder Drehratensensor 11e an der Antriebseinheit 8 bereitgestellt wird. Die Anordnung ermöglicht so jeweils eine direkte Erfassung einer rotatorischen Geschwindigkeit oder Beschleunigung an der Antriebseinheit 8 und eine translatorische Beschleunigung an der Führungskomponente 18.

Dadurch kann, beispielsweise basierend auf einem Soll-IstVergleich für das erfasste Messsignal hinsichtlich einer bekannten und üblichen von der Antriebseinheit 8 ausgehenden Schwingung (ausgedrückt in Beschleunigungswerten), eine Zustandsinformation des Vakuumventils abgeleitet werden. Sollten die Beschleunigungen in einen Wertebereich gelangen, welcher zuvor als kritisch eingestuft wurde, kann ein Warnsignal bereitgestellt werden.

Die **Figuren 4a,4b** zeigen schematisch eine weitere mögliche Sensoranordnung, hier beispielsweise in einem so genannten Monoventil, dargestellt in einer Geschlossenposition G (Fig.4a) und einer Offenposition O (Fig.4b).

Das Ventil zum gasdichten Schliessen eines Fliesswegs mittels einer Linearbewegung besitzt ein Ventilgehäuse 17 mit einer Öffnung 2 für den Fliessweg, wobei die Öffnung 2 eine geometrische Öffnungsachse 5 entlang des Fliesswegs aufweist. Das Verschlusselement 4 ist linear entlang einer zu der Öffnungsachse 5 quer verlaufenden, geometrischen Verstellachse 19 in einer Verschlusselementebene 20 von einer die Öffnung 2 freigebenden, geöffneten Position O in eine über die Öffnung 2 linear geschobene, geschlossene Position G in eine Schliessrichtung und umgekehrt zurück in eine Öffnungsrichtung verschiebbar.

Zum Beispiel umschliesst eine gekrümmte erste Dichtfläche 6a die Öffnung 2 des Ventilgehäuses 17 entlang eines ersten Abschnitts 21a in einer ersten Ebene 22a und entlang eines zweiten Abschnitts 21b in einer zweiten Ebene 22b. Die erste Ebene 22a und die zweite Ebene 22b sind zueinander beabstandet, verlaufen parallel zueinander und parallel zu der Verschlusselementebene 20. Somit weisen der erste Abschnitt 21a und der gegenüberliegende zweite Abschnitt 21b zueinander einen geometrischen Versatz quer zu der Verstellachse 19 und in Richtung der Öffnungsachse 5 auf. Zwischen den beiden gegenüberliegenden Abschnitten 21a und 21b in dem sich entlang der Verstellachse 19 erstreckenden Bereich ist die Öffnung 2 angeordnet.

Das Verschlusselement 4 weist eine zur ersten Dichtfläche 6a korrespondierende zweite Dichtfläche 6b auf, welche entlang zum ersten und zweiten Abschnitt 21a,21b korrespondierender Abschnitte verläuft.

Monoventile, d.h. mittels einer einzigen linearen Bewegung schliessbare Vakuumventile haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist.

Insbesondere liegt ein Vorteil von Monoventilen beispielsweise darin, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse 5 kaum in der Lage, auf das Verschlusselement 4 entlang der Öffnungsachse 5 auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordert.

Die in den Figuren 4a und 4b gezeigte Sensoranordnung umfasst einen Inertialsensor 11e, angeordnet am Ventilgehäuse 17, zur Erfassung einer Beschleunigung beispielsweise entlang der Verstellachse 19, welche z.B. aus der Verstellung des Verschlusselement 4 folgt. Hierbei kann der Verschlussprozess auf Irregularitäten überprüft werden.

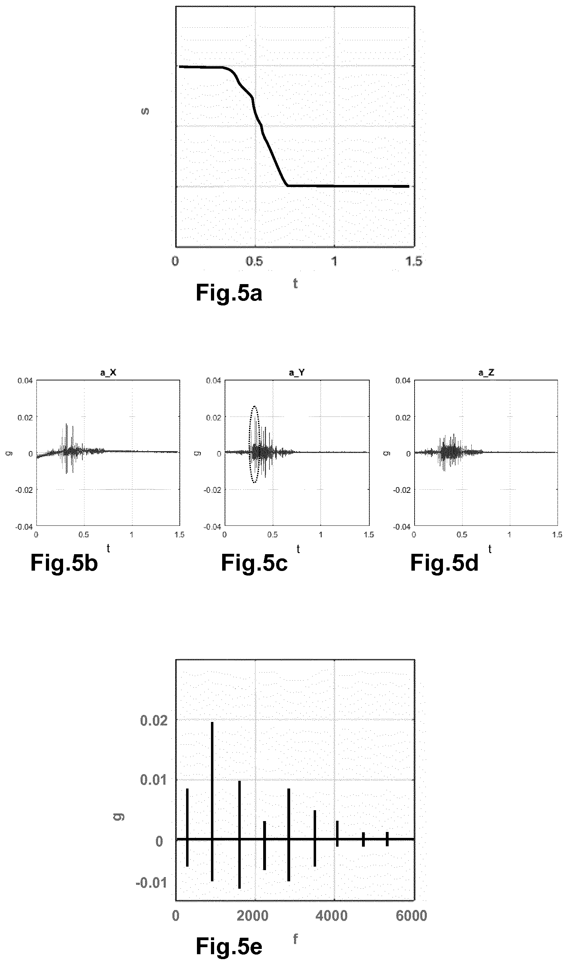

**Figur 5a** zeigt einen beispielhaften über der Zeit aufgetragenen Verschlusspfad eines erfindungsgemässen Vakuumventils. **Figuren 5b** bis **5d** zeigen in drei orthogonal zueinander stehenden Raumachsen während dieses Verschlussprozesses aufgezeichnete Beschleunigungen durch einen oder mehrere Beschleunigungssensoren. Eine beispielhafte Analyse des in Figur 5c gestrichelt eingekreisten Bereichs ist in dem Frequenzspektrum gemäss **Figur 5e** gezeigt. Zum Beispiel lassen sich anhand der charakteristischen Frequenzen einzelne Komponenten des Ventils identifizieren, womit eine Bewertung hinsichtlich eines Überschreitens einer vorgegebenen oder ermittelten Grenzamplitude stattfinden kann.

Die Inertialsensoren sind zum Beispiel piezoelektrische Beschleunigungssensoren, welche anhand von piezokeramischen Sensorplättchen dynamische Druckschwankungen in elektrische Messsignale umwandeln. Ein weiteres Beispiel sind siliziumbasierte mikro-elektro-mechanische Systeme (MEMS), in welchen z.B. eine Auslenkung "klassischer" Feder-Masse-Systeme elektrisch (über die Kapazität) vermessen wird.

Eine erfindungsgemässe Sensoranordnung ist dazu eingerichtet, in einem Amplitudenbereich von mehreren Gravitationsbeschleunigungen (g) sowie mit einer Amplitudenauflösung von bis zu 1/100000 g zu messen. Beschleunigt wird ein Inertialsensor stets dann, wenn eine Kraft auf ihn wirkt. Beispielsweise wird der Sensor beim Starten einer Bewegung positiv beschleunigt um beim Abbremsen der Bewegung negativ beschleunigt. Selbst minimale Auslenkungen (wie z.B. bei Vibrationen) können grosse Beschleunigungen aufweisen, welche der Sensor detektieren kann. Da Vibrationen hohe Frequenzen aufweisen können, werden mit dem Sensor beispielsweise 52000 Samples pro Sekunde gemessen (kleinere oder grössere Frequenzen sind ebenfalls möglich und je nach Anwendung praktikabel). Zur Bewertung dieser Signale können die zeitabhängigen Messungen in ein frequenzabhängiges Signal (Frequenzspektrum) umgewandelt werden. Der Sensor kann dies insbesondere triaxial bewerkstelligen. Aufgrund von Vibrationen kann auf den Zustand z.B. des Antriebs geschlossen werden. So kann beispielsweise anhand eines Frequenzspektrums beurteilt werden, ob ein Schmierfett noch eine genügende Konsistenz oder ob es bereits Alterserscheinungen aufweist. Auch kann im System (z.B. über mehrere Prozesse hinweg) detektiert werden, ob sich das Frequenzspektrum z.B. durch Verschleiss, insbesondere Abrieb in der Antriebseinheit ändert, und/oder wann auf Grundlage eines ermittelten Trends voraussichtlich ein nicht mehr hinnehmbarer Verschleiss eintritt. Auch können (gleich ab der ersten Benutzung) Transportschäden, Erdbeben oder Crashs mit dem Ventil oder nahe gelegenen Komponenten im Prozess ermittelt werden, insbesondere wobei Massnahmen ergriffen werden können, z.B. in Form eines Not-Stopp oder einer Verlangsamung des Prozesses.

Gemäss einer Ausführungsform der Erfindung werden aus gemessenen Beschleunigungen, insbesondere Beschleunigungen, die in einer spezifischen Richtung detektiert wurden, durch Integralrechnung Verfahrwege oder Verbiegewege errechnet. Mit dem dadurch errechneten Weg und der bekannten Steifheit (z.B. E-Modul, G-Modul) der Stange 15 bzw. des Arms 7 (Kopplungsbauteil) kann eine Anpresskraft ermittelt werden, welche vom Ventilverschluss 4 auf den Ventilsitz 3 wirkt. Beispielsweise können auch mit einer Bestimmung der momentanen Gesamt-Beschleunigungsrichtung (Vektorbildung aus den in X-, Y-, und Z-Richtung ermittelten Beschleunigungswerten) die jeweiligen Verschluss- oder Öffnungsphasen des Ventilmechanismus beobachtet werden. So lassen sich die Bewegung quer zur Öffnungsachse und die Bewegung entlang der Öffnungsachse in den Messwerten von einander unterscheiden. Auch kann der eigentliche Verschlussmoment detektiert werden, d.h. der Zeitpunkt zu welchem der Ventilverschluss auf den Ventilsitz anstösst. Ab jenem Verschlussmoment kann dann insbesondere der besagte Verbiegeweg ermittelt werden, der zur Anpresskraftbestimmung verwendet wird. Beispielsweise kann der Inertialsensor als Beschleunigungssensor dafür an der Stange 15 oder dem Arm 7 angeordnet sein. Auch kann der Inertialsensor als Drehratensensor am Antrieb 8 oder an einem Ende der Stange 15 oder des Arms 7 angeordnet sein.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vakuumventil zur Regelung eines Volumen- oder Massenstroms und/oder zum gasdichten Unterbrechen eines Fliesswegs, mit
• einem Ventilsitz (3), der eine eine Öffnungsachse (5) definierende Ventilöffnung (2) und eine die Ventilöffnung (2) umlaufende erste Dichtfläche (6a) aufweist,
• einen Ventilverschluss (4), der zumindest zu einem von:
□ Regeln des Volumen- oder Massenstroms, und
□ Unterbrechen des Fliesswegs,
ausgebildet ist und eine zu der ersten Dichtfläche (6a) korrespondierende zweite Dichtfläche (6b) aufweist,
• einer mit dem Ventilverschluss (13,41) gekoppelten Antriebseinheit (16), die derart ausgebildet ist, dass der Ventilverschluss (13,41)
□ zur Bereitstellung von jeweiligen Ventilöffnungszuständen definiert variierbar und einstellbar ist und
□ von einer Offenposition (O), in welcher der Ventilverschluss (13,41) die Ventilöffnung (12,42) zumindest teilweise freigibt in eine Schliessposition (G), in welcher die zweite Dichtfläche (18,48) in Richtung der ersten Dichtfläche (15,45) gedrückt wird und die Ventilöffnung (12,42) im Wesentlichen gasdicht verschlossen ist, und zurück verstellbar ist,
**dadurch gekennzeichnet, dass**
das Vakuumventil ferner eine Sensoranordnung mit mindestens einem Inertialsensor (11a) umfasst, wobei die Sensoranordnung zur Erfassung eines Messsignals bezüglich einer am Ventil auftretenden Beschleunigung ausgebildet ist.

2. Vakuumventil nach Anspruch 1,
**gekennzeichnet durch**
eine Kontroll- und Steuereinheit, die zur Steuerung der Sensoranordnung und zur Verstellung des Ventilverschlusses (4) zwischen der Offenposition (O) und der Schliessposition (G) mittels der Antriebseinheit (8) ausgebildet ist.

3. Vakuumventil nach Anspruch 2,
**dadurch gekennzeichnet, dass**
die Kontroll- und Steuereinheit dazu ausgebildet ist, basierend auf den Messwerten ein Frequenzspektrum bereitzustellen.

4. Vakuumventil nach Anspruch 2 oder 3,
**dadurch gekennzeichnet, dass**
die Kontroll- und Steuereinheit dazu ausgebildet ist, basierend auf einer Analyse der Messwerte hinsichtlich einer oder mehrerer Messwertfrequenzen ein Ausgabesignal bezüglich einer Lokalisierung einer die jeweilige Messwertfrequenz verursachenden Schwingung bereitzustellen.

5. Vakuumventil nach einem der Ansprüche 2 bis 4,
**dadurch gekennzeichnet, dass**
die Kontroll- und Steuereinheit dazu ausgebildet ist, basierend auf einem Abgleich der Messwerte mit vordefinierten Toleranzwerten ein Ausgabesignal bezüglich einer Bewertung eines durch das Vakuumventil gesteuerten Prozesses bereitzustellen.

6. Vakuumventil nach einem der Ansprüche 2 bis 5,
**dadurch gekennzeichnet, dass**
die Kontroll- und Steuereinheit dazu ausgebildet ist, basierend auf einer Trendüberwachung von Messwerten mehrerer durch das Vakuumventil gesteuerter Prozesse ein Ausgabesignal bereitzustellen, welches eines oder beide von:
• einer Warnung über erhöhten Verschleiss einer Komponente des Vakuumventils, und
• einer Vorhersage über die Haltbarkeit einer Komponente des Vakuumventils,
umfasst.

7. Vakuumventil nach einem der Ansprüche 2 bis 6,
**dadurch gekennzeichnet, dass**
die Kontroll- und Steuereinheit dazu ausgebildet ist, basierend auf
• während des Schliessvorgangs parallel zur Öffnungsachse gemessenen Beschleunigungswerten und
• zumindest einem bekannten Festigkeitswert des Kopplungsbauteils
eine Anpresskraft zu bestimmen, mit welcher der Ventilverschluss in der Schliessposition am Ventilsitz anliegt.

8. Vakuumventil nach einem der vorhergehenden Ansprüche,
**dadurch gekennzeichnet, dass**
die Sensoranordnung derart angeordnet und ausgebildet ist, dass durch das Messsignal eine Beschleunigung erfasst wird, die durch Reibschwingung an zumindest einem der nachfolgend genannten Orte entsteht:
• zwischen zumindest einem Teil der Dichtung (10) und zumindest einem Teil der ersten Dichtfläche (6a), und
• zwischen zumindest einem Teil der Dichtung (10) und zumindest einem Teil der zweiten Dichtfläche (6a).

9. Vakuumventil nach einem der vorhergehenden Ansprüche,
**dadurch gekennzeichnet, dass**
die Sensoranordnung derart angeordnet und ausgebildet ist, dass durch das Messsignal eine Beschleunigung erfasst wird, die in der Antriebseinheit (16) entsteht.

10. Vakuumventil nach einem der vorhergehenden Ansprüche,
**dadurch gekennzeichnet, dass**
die Sensoranordnung derart angeordnet und ausgebildet ist, dass durch das Messsignal eine Beschleunigung erfasst wird, die von Aussen auf das Vakuumventil einwirkt.

11. Vakuumventil nach einem der vorhergehenden Ansprüche,
**dadurch gekennzeichnet, dass**
die Sensoranordnung derart ausgebildet ist, dass zumindest ein Inertialsensor an zumindest einem der nachfolgend genannten Orte angeordnet ist:
• an einem Teil des Ventilsitzes, das zumindest einen Teil der ersten Dichtfläche aufweist,
• an einem Teil des Ventilverschlusses, das zumindest einen Teil der zweiten Dichtfläche aufweist,
• an einem Ventilgehäuse, und
• an einem Gehäuse der Antriebseinheit.

12. Vakuumventil nach einem der vorhergehenden Ansprüche,
**dadurch gekennzeichnet, dass**
die Sensoranordnung mindestens einen der nachfolgend genannten Inertialsensoren umfasst:
• ein Beschleunigungssensor, welcher Beschleunigungen entlang mindestens einer definiert ausgerichteten Achse detektiert, und
• ein Drehratensensor, welcher Rotationsgeschwindigkeiten oder Rotationsbeschleunigungen um mindestens eine definiert ausgerichtete Achse detektiert.

13. Vakuumventil nach einem der vorhergehenden Ansprüche,
**dadurch gekennzeichnet, dass**
• die Antriebseinheit (8) mit dem Ventilgehäuse (17) verbunden ist, und
• der Ventilverschluss (4) über ein Kopplungsbauteil mit der Antriebseinheit (8) gekoppelt ist

14. Vakuumventil nach einem der vorhergehenden Ansprüche,
**dadurch gekennzeichnet, dass**
das Vakuumventil einen von einer äusseren Umgebung abgetrennten Vakuumbereich definiert und zum Messsignal beitragende Inertialsensoren der Sensoranordnung ausserhalb des Vakuumbereichs angeordnet sind.

15. Vakuumventil nach einem der vorhergehenden Ansprüche,
**dadurch gekennzeichnet, dass**
der Ventilsitz (3)
• durch einen Teil des Vakuumventils gebildet wird, oder
• von einer Prozesskammer bereitgestellt ist.
